(19) Europäisches Patentamt
European Patent Office
Office européen des brevets

(11) **EP 2 528 029 A1**

(12) **EUROPEAN PATENT APPLICATION**

(43) Date of publication:
**28.11.2012 Bulletin 2012/48**

(51) Int Cl.:
**G06Q 20/00** *(2012.01)*    **G06Q 30/00** *(2012.01)*

(21) Application number: **11305652.7**

(22) Date of filing: **27.05.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Accenture Global Services Limited Dublin 4 (IE)**

(72) Inventor: **Hasson, Robert**
**06600 ANTIBES (FR)**

(74) Representative: **de Beaumont, Michel**
**1bis, rue Champollion**
**38000 Grenoble (FR)**

Remarks:
Amended claims in accordance with Rule 137(2) EPC.

(54) **System for managing digital vouchers**

(57)    The invention concerns a method of updating, by a mobile device (106), the value of a digital voucher having an initial value, comprising: receiving, by said mobile device from a remote server (102), said digital voucher having said initial value; receiving, by a processing unit of said mobile device, at least one input parameter; calculating, by said processing unit, a new value of said digital voucher based on said at least one input parameter; and displaying said new value on a display of said mobile device.

Fig 1

EP 2 528 029 A1

**Description**

## TECHNICAL FIELD OF THE INVENTION

The present disclosure relates to methods and systems for managing digital vouchers, and in particular to methods and systems for updating the value of digital vouchers after transmission to one or more mobile devices.

## BACKGROUND OF THE INVENTION

Paper vouchers or coupons are often issued by merchants in order to entice consumers, for example by offering a gift payment, discounts, or rebates that can be used by the consumer when purchasing products or services.

It has been proposed to replace paper vouchers or coupons by electronic vouchers. Thus, whereas a paper voucher must be printed by a consumer or physically transmitted or handed to a consumer, for example via a postal service, an electronic voucher may be electronically transmitted to the mobile device of the consumer, thereby facilitating voucher distribution. Furthermore, the voucher may be applied to a purchase in a simple fashion at a point of sale of the merchant, when the consumer presents their mobile device.

In some circumstances it would be desirable to alter the value of a voucher after issue, for example in the case that stocks of the products to which the voucher applies are running low. It is difficult or impossible to change the face value of a paper voucher after it has been issued. Digital values of a voucher that are stored in a volatile memory have the potential to be modified. However, there are technical issues in implementing such a voucher update method and system.

## SUMMARY OF THE INVENTION

It is an aim of embodiments of the present invention to at least partially address one or more needs in the prior art.

According to one aspect of the present disclosure, there is provided a method of updating, by a mobile device, the value of a digital voucher having an initial value, comprising: receiving, by said mobile device from a remote server, said digital voucher having said initial value; receiving, by a processing unit of said mobile device, at least one input parameter; calculating, by said processing unit, a new value of said digital voucher based on said at least one input parameter; and displaying said new value on a display of said mobile device.

According to one embodiment, at least one input parameter is received from one or more of: said remote server; circuitry of said mobile device.

According to another embodiment, the at least one input parameter comprises one or more of: a current time and date value; a stock count; meteorological data; and location data.

According to another embodiment, the method further comprises transmitting by the mobile device, during a commercial transaction involving said digital voucher, said new value of said digital voucher to point of sale equipment.

According to another embodiment, the method further comprises, after calculating said new value of said digital voucher, the step of receiving by said mobile device a request from said user to freeze the value of said digital voucher until a subsequent transaction involving said digital voucher.

According to another embodiment, calculating said new value of said digital voucher is based on an algorithm received by said mobile device in association with said digital voucher.

According to another embodiment, the method further comprises, prior to said step of receiving said second input data, the step of calculating, based on at least one initial parameter, said initial value of said digital voucher.

According to another embodiment, the said step of calculating said new value of said digital voucher is triggered by at least one of: reception of a new value of at least one of said input parameters; and the expiry of a fixed time interval.

According to a further aspect of the present disclosure, there is provided a mobile device comprising: a communications interface adapted to receive from a remote server a digital voucher having an initial value; a processing unit adapted to: receive at least one input parameter; and calculate a new value of said digital voucher based on said at least one input parameter; and a display configured to display said new value of said digital voucher.

According to one embodiment, the mobile device further comprises circuitry adapted to supply said at least one input parameter.

According to another embodiment, said circuitry comprises a positioning device adapted to supply location data indicating a location of said mobile device, said at least one parameter comprising said location data.

According to another embodiment, the mobile device further comprises a proximity interface for communicating with point of sale equipment and transmitting said new value of said digital voucher to said point of sale equipment.

According to a further aspect of the present disclosure, there is provided a digital voucher management system comprising: a digital voucher server; and the above mobile device.

According to one embodiment, the system further comprises at least one merchant equipment in communication with said digital voucher server and adapted to provide said at least one parameter.

## BRIEF DESCRIPTION OF THE DRAWINGS

The foregoing and other purposes, features, aspects and advantages of the present disclosure will become apparent from the following detailed description of embodiments, given by way of illustration and not limitation with reference to the accompanying drawings, in which:

Figure 1 schematically illustrates a voucher distribution system according to an embodiment of the present disclosure;
Figure 2 schematically illustrates a digital voucher according to an embodiment of the present disclosure;
Figure 3 schematically illustrates a mobile device of the digital voucher system of Figure 1 in more detail according to an embodiment of the present disclosure;
Figure 4 schematically illustrates a processor and display of the mobile device in more detail according to an embodiment of the present disclosure;
Figure 5 is a flow diagram illustrating steps in a method of updating the value of a digital voucher according to an embodiment of the present disclosure; and
Figure 6 illustrates a system for managing digital vouchers according to an embodiment of the present disclosure.

## DETAILED DESCRIPTION OF EMBODIMENTS OF THE PRESENT DISCLOSURE

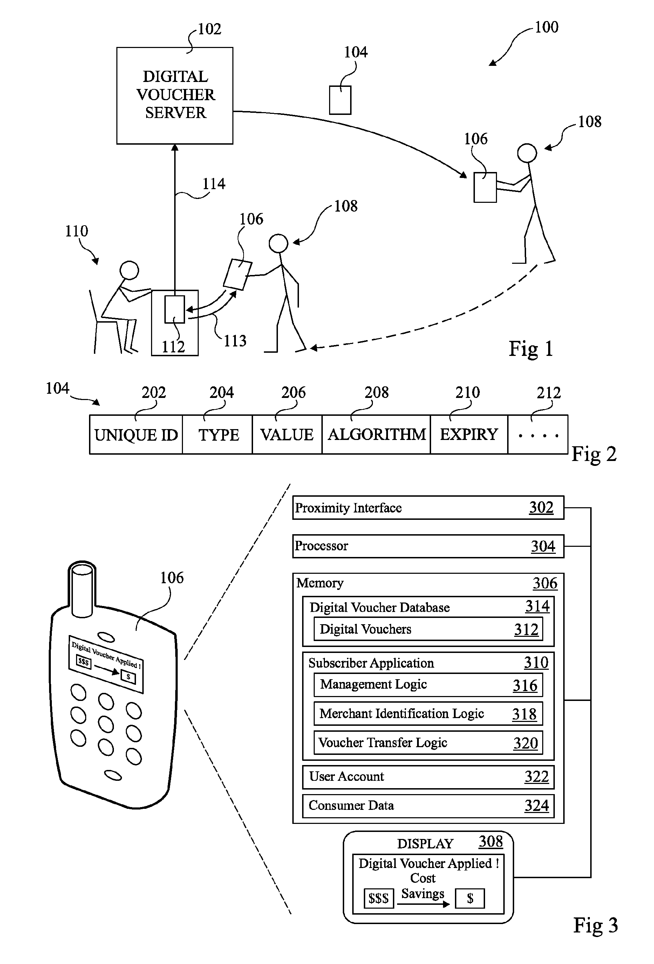

Figure 1 illustrates a voucher distribution system 100 comprising a digital voucher server 102, which distributes digital vouchers to users. For example, the digital voucher server 102 forms part of the mobile telecommunications network equipment that communicates with mobile devices via the wireless network, or it could be an internet based server coupled to the mobile device 106 via the mobile network.

A digital voucher 104 is transmitted to the mobile device 106 of a user 108, and stored in a memory (not illustrated in Figure 1) of device 106. The user 108 may then immediately, or at a later time, visit a merchant, and apply the digital voucher to a purchase at the point of sale 110. For example, the merchant could be a retail store, restaurant, cinema or other commercial establishment. The user 108 may present the mobile device to a cashier to be validated. For example, an image corresponding to the digital voucher is displayed on a display (not shown in Figure 1) of the mobile device 106, to be visually verified by a cashier, or laser scanned in the case the image is a barcode or other machine readable image. Alternatively, the digital voucher could be automatically digitally accessed by point of sale equipment 112, via a two-way communications path 113, for example using near-field communications (NFC), Bluetooth, infrared or other communications standard. In all cases, an identifier of the digital voucher is for example input to the point of sale equipment 112, either manually by the cashier reading the display of the mobile device, or automatically.

The point of sale equipment 112 may store a database of the identifiers of issued vouchers, and the digital voucher stored on mobile device 106 can be validated by verifying that it is on the list of issued vouchers.

Once validated, the voucher can be applied to the transaction. The voucher value for example forms part of the digital voucher itself. For example the voucher is applied by reducing the final bill by a certain percentage or by a fixed value, or generating a credit that the user can redeem at a later date.

Once the transaction has been completed, the database of issued identifiers stored by the merchant can be updated to indicate that the digital voucher has already been used, preventing the same voucher from being presented more than once at the same merchant. Alternatively or additionally, in the case that the two-way communications path 113 is used to access the digital voucher, the voucher may be deleted by the point of sale equipment 112 from the memory of the mobile device 106 to prevent it from being reused.

The point of sale equipment 112 may also communicate with the digital voucher server 102 via a communications path 114, for example corresponding to an SMS (short messaging service), MMS (multimedia messaging service) or wired or wireless internet connection, such that the server 102 can be informed that the voucher has been used.

Figure 2 illustrates an example of a digital voucher 104, for example formed of a fixed or variable number of data bits that may be stored by electronic storage devices such as in memories of the digital voucher server 102 and mobile device 106. The data bits may represent one or more values associated with the digital voucher, as will now be explained.

The digital voucher for example comprises a segment of bits 202 forming a unique identifier of the voucher. The length of this unique identifier for example depends on the number of vouchers that have been issued, but could for example be between 1 and 32 bytes long.

A following segment of bits 204 for example indicates a type of the voucher, and in particular whether the voucher is a discount voucher, payment voucher, or other type of voucher. For example, as an alternative to a discount or payment voucher, the type segment 204 may indicate that the voucher permits a certain number of unitary purchases or accesses, for example a certain number of single voyages in a transport system, entrances to a cinema etc.

A following segment of bits 206 for example indicates the value of the voucher, which, depending on the type of voucher, could be expressed as a percentage discount, currency value, number of unitary purchases or accesses, etc. According to the embodiments described herein, this value may change dynamically based on input data parameters.

A following segment 208 for example contains instruction code or other data describing an algorithm used for determining the voucher value. In particular, a formula may be used to calculate the voucher value, based on one or more variables referred to herein as input parameters.

A following segment 210 indicates an expiry date of the voucher, which could be anything from a few hours to a few years after its issue. As explained above, alternatively this information could be stored in a merchant voucher database.

The digital voucher may additionally or alternatively comprise other data values 112, such as data representing an image for use in validating the voucher, a voucher name, directions to the merchant premises, a phone number of the merchant, etc.

Figure 3 illustrates the mobile device 106 of Figure 1 in more detail according to one example.

The mobile device 106 is for example a cellular telephone, smartphone, digital camera, portable games console, or other mobile communication device.

The mobile device comprises a proximity communication interface 302, a processor 304, a memory 306, and a display 308.

The memory 306 for example stores a digital voucher subscribed application 310 that aids a consumer using the device 300 in managing digital vouchers 312 stored on the memory and transferring them to merchants as part of a business transaction. The digital vouchers 312 are for example organized in a voucher database 314 stored on the memory 306. The subscriber application 310 may include digital voucher management logic 316, proximate merchant identification logic 318, and digital voucher transfer logic 320. The memory 306 is for example a non-volatile memory such as a Flash memory.

The digital voucher management logic 316 aids the device 106 in receiving and managing new digital vouchers. The device 106 may receive the digital vouchers by SMS or MMS message, email, or other type of communication from digital voucher server.

The digital voucher management logic 316 for example synchronizes a user account 322 stored in the memory 306 with a corresponding user account maintained by digital voucher server 102. Synchronization for example involves deleting from the mobile device 106 any digital vouchers that have been used, as indicated by the merchant point of sale equipment.

The digital vouchers 312 stored in memory 306 may be transferred as a string of bytes representing voucher data or parameters.

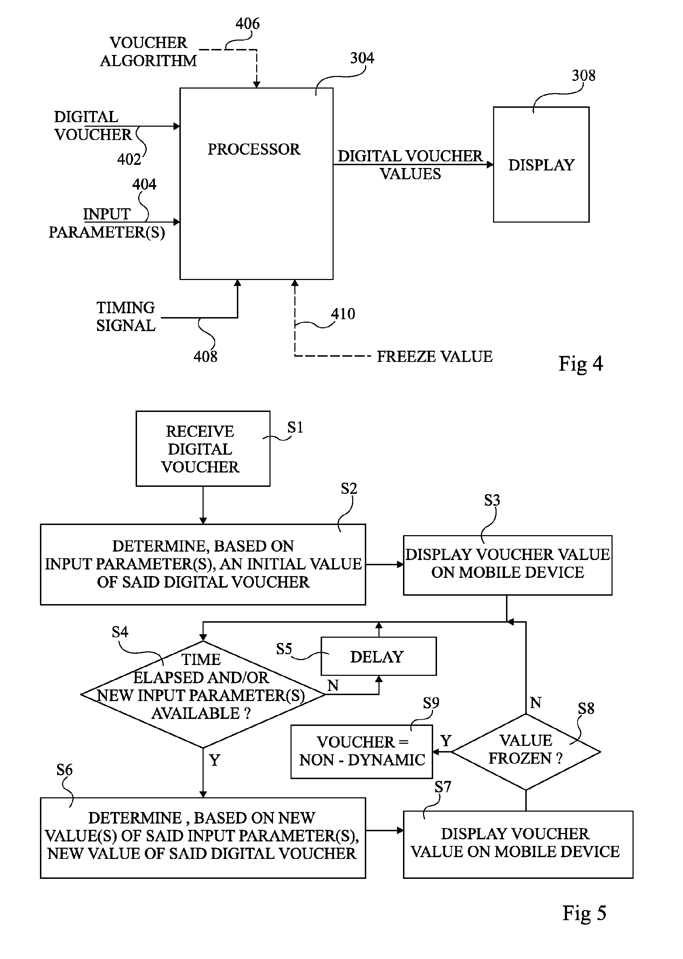

Figure 4 illustrates the processor 304 and display 308 of the mobile device in more detail.

The processor 304 receives digital vouchers via an input 402, and one or more input parameters on an input line 404. The digital vouchers and input parameters are for example received via an HTTP (HyperText Transfer Protocol) connection, SMS, or other data transmission protocol. The digital vouchers maybe transmitted to the mobile device as soon as they become available at the digital voucher server 102 of Figure 1 (a push scenario), or they may be selected for download by a user of the mobile device (a pull scenario).

As described above, the digital voucher may also comprise an algorithm for calculating new values of the digital voucher based on the input parameters. Alternatively, such an algorithm may be supplied on an input 406 of the device 106 in a separate transmission from the digital voucher server 102. For example, the algorithm could form part of a digital voucher application that is downloaded via an HTTP connection onto the mobile device 106. This application for example then supports the download and management of the vouchers.

The processor 304 also receives a timing signal 408, which may be used to control the frequency at which new values of the digital voucher are determined. An optional input 410 indicates a "freeze" command from the user, which indicates that the user wishes to freeze a current value of the digital voucher, rendering it no longer dynamic.

The processor 304 determines the digital voucher values, for example periodically and/or when the value of one or more input parameters changes, and supplies the updated values to the display 308, such that the user is able to view the current value of one or more of the vouchers stored on their mobile device 106.

Figure 5 is a flow diagram illustrating steps in a method of updating the value of a digital voucher. The method is for example implemented by the processor 304 of the mobile device 106 of Figure 1, for one or more digital vouchers received from the digital voucher server 102.

In a first step S1, a digital voucher is received. As indicated above, this could be following a specific request by the user of the mobile device 106, or an unprompted transmission, for example automatically handled by a voucher management application installed on the mobile device 106.

In a following step S2, optionally an initial value of the digital voucher is determined, based on the one or more input parameters. Alternatively, the digital voucher may have an initial value pre-programmed.

In next step S3, the initial value of the digital voucher is for example displayed on the display 308 of the mobile device. For example, the voucher value is displayed in combination with a message indicating the parameters based on which the voucher value will change. As an example, the following message could be displayed "You have successfully received a discount voucher for Alpha shoes. Today this voucher has a value of 20 percent discount, but from tomorrow this value may fluctuate based on stock levels".

In a next step S4, it is determined whether a predefined time delay has elapsed, and/or if new values of the input parameters have been received. For example a certain minimum period may be defined between each update of the voucher value. This would give the user a defined period in which to use the voucher at its current value before the value changes again. Additionally, a new value of the voucher is for example only determined if one of the input parameters has changed since the initial voucher value was set. Alternatively, updates to the voucher values could be performed both at the predetermined time intervals and also when new values of the input parameters become available.

After S4, if the time period has not yet elapsed and/or no new input parameters are available, the next step is S5, in which a time delay is imposed, for example of a new minutes or hours, until step S4 is repeated. However, if in step S4 the time delay has elapsed and/or new input parameters are available, the next step is S6.

In step S6, a new value of the digital voucher is calculated, based on one or more new values of the input parameters. As explained above, an algorithm is for example applied to the one or more input parameters. In one example, a different weight is applied to each input parameter, to generate the new voucher value. Assuming input parameters $P_1$ to $P_N$, where N is for example equal to an integer of 2 or more, the following formula could be applied:

$$\text{New voucher value} = C_1.P_1 + \ldots + C_N.P_N$$

where $C_1$ to $C_N$ are the weighting values applied to each parameter respectively. Alternatively, ranges of the input parameters could be used to assign certain voucher values. For example, in the case that the parameter is a location, ranges in the longitude and latitude coordinates could be used to determine the voucher value. Other examples of parameters include:

- Weather conditions
- Number of customers in the merchant premises
- A stock market index
- A commodity price
- Results of an election
- The distance from the merchant premises
- The number of friends the user has on facebook ®
- The number of comments on facebook ® if the voucher is shared
- The number of followers the user has on twitter ®
- The number of check-ins on foursquare ®

In a next step S7, the new voucher value is displayed on the display of the mobile device. In the case that this value is fixed for a certain period before a new value is again calculated, this period is for example also indicated on the display. For example, the display message could be "Your discount voucher for Alpha shoes has been updated, and now gives a 30 percent discount until the end of the business tomorrow".

In a next step S8, the user of the mobile device 107 may opt to freeze the current voucher value. This step is optional, and for example could apply to the case in which the voucher value could go up or down and thus by freezing its value, the user effectively makes a gamble that the price will in future go down rather than up. For example, after displaying the voucher value, a message could be displayed by the mobile device, such as: "The current voucher value will be valid for 1 hour. Alternatively, click here to freeze this current voucher value". If selected by the user, the next step is S9, in which the voucher's value is for example frozen until a further transaction is made using the voucher. Alternatively, if no user command is received in step S8, the next step is S4 again, in which the voucher value may continue to be updated.

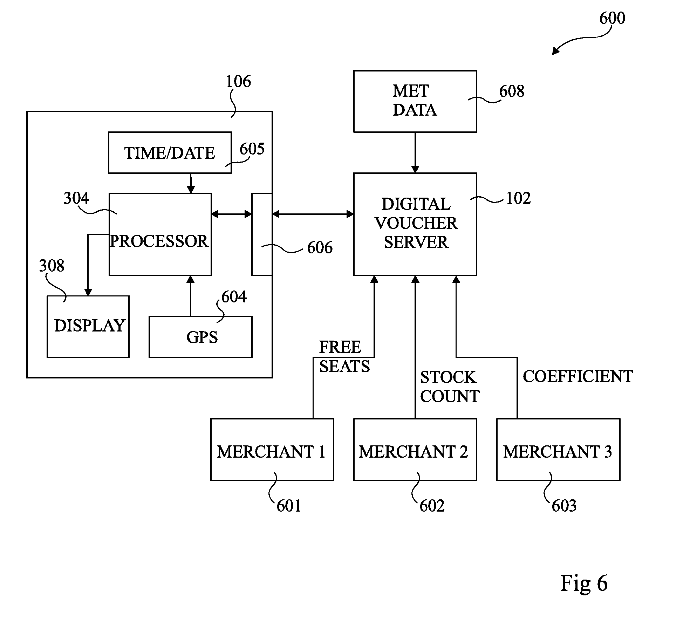

Figure 6 illustrates a system 600 comprising the mobile device 106, digital voucher server 102, and merchant equipment 601, 602 and 603. The mobile processor 304, which determines updated voucher values, for example receives the input parameters from a number of sources as illustrated in Figure 6. These include a GPS (global positioning system) device 604 and time and date source 605 in the mobile device 106, and a number of external inputs received via a communications interface 606 of the mobile device. Other sources could additionally or alternatively provide the other examples of parameters listed above.

The GPS device 604 provides location data, and this is for example compared with a range of locations, stored by the mobile device 106 in association with a given voucher, to determine the new voucher value. For example, the voucher value may be higher for those customers who must travel further to reach a particular merchant.

The time and/or date source 605 for example allows the voucher value to fluctuate based on the time or date. For example, at certain hours of the day when the merchant experiences a dip in business, the voucher value could be high. Alternatively, different voucher values could be assigned to each day of the week.

The communications interface 606 communicates with the digital voucher server 102, which further receives meteorological data from an external source 608, and also data from hardware equipment associated with the merchants 601 to 603. The meteorological data is for example used as a parameter for determining voucher values associated with merchants whose business fluctuates based on the weather.

The merchant equipment 601 to 603 provides data that originates from the merchant premises. For example, merchant equipment 601 corresponds to a café or restaurant, and provides an indication of a number of free seats, based on which the voucher value can vary. The merchant equipment 602 for example corresponds to a clothes or shoe store, and indicates an indication of a stock count regarding one or more promotional items concerned by the voucher. The merchant 603 for example simply transmits a coefficient indicating the level at which the voucher value should be set, for example based on a range of variables tracked by this merchant.

The data from each of the merchant equipment 601 to 603 may be generated automatically, for example by sensors adapted to detect human presence and thus the number available seats, by automatic stock tracking systems, such as logic implemented in the point of sale equipment of the merchant, or by other types of detectors. The digital voucher server 102 for example filters these input parameters, and provides only the parameters to the mobile device 106 that are to be used to update the stored vouchers. For this purpose, the digital voucher server 102 for example maintains a list of the vouchers downloaded by the mobile device 106.

An advantage of the methods and systems described herein for updating digital vouchers is that, by calculating the updated voucher values by the mobile device based on input parameters, the voucher values may be automatically updated in an efficient manner. Furthermore, one or a few parameters may be transmitted to a mobile device and used to update a plurality of vouchers stored by the mobile device. Also, the system is particularly versatile in that a wide range of parameters, originating from the mobile device or externally, can be used to determine the voucher value.

Having thus described illustrative embodiments of the disclosure, various alterations, modifications and improvements will readily occur to those skilled in the art.

For example, it will be apparent to those skilled in the art that while examples of voucher distribution and management for a single mobile device have been described, the same digital voucher server is for example adapted to distribute vouchers to and manage vouchers for any number of mobile devices simultaneously.

Furthermore, while a number of examples of sources of the input parameters have been described, it will be apparent to those skilled in the art that other types of data could be used to update the voucher values.

Furthermore, the various features described in relation to the various embodiments can be combined in any combination.

**Claims**

1. A method of updating, by a mobile device (106), the value of a digital voucher having an initial value, comprising:

   receiving, by said mobile device from a remote server (102), said digital voucher having said initial value;
   receiving, by a processing unit (304) of said mobile device, at least one input parameter;
   calculating, by said processing unit, a new value of said digital voucher based on said at least one input parameter; and
   displaying said new value on a display (308) of said mobile device.

2. The method of claim 1, wherein said at least one input parameter is received from one or more of:

   said remote server (102);
   circuitry (604, 605) of said mobile device.

3. The method of claim 1 or 2, wherein said at least one input parameter comprises one or more of:

   a current time and date value;
   a stock count;
   meteorological data; and
   location data.

4. The method of any of claims 1 to 3, further comprising transmitting by said mobile device, during a commercial transaction involving said digital voucher, said new value of said digital voucher to point of sale equipment (112).

5. The method of any of claims 1 to 4, further comprising, after calculating said new value of said digital voucher, the step of receiving by said mobile device a request from said user to freeze the value of said digital voucher until a subsequent transaction involving said digital voucher.

6. The method of any of claims 1 to 5, wherein calculating said new value of said digital voucher is based on an algorithm (208) received by said mobile device in association with said digital voucher.

7. The method of any of claims 1 to 6, further comprising, prior to said step of receiving said second input data, the step of calculating, based on at least one initial parameter, said initial value of said digital voucher.

8. The method of any of claims 1 to 7, wherein said step of calculating said new value of said digital voucher is triggered by at least one of:

   reception of a new value of at least one of said input parameters; and
   the expiry of a fixed time interval.

9. A mobile device comprising:

   a communications interface (606) adapted to receive from a remote server (102) a digital voucher having an initial value;
   a processing unit (304) adapted to:

      receive at least one input parameter; and
      calculate a new value of said digital voucher based on said at least one input parameter; and

   a display (308) configured to display said new value of said digital voucher.

10. The mobile device of claim 9, further comprising circuitry adapted to supply said at least one input parameter.

11. The mobile device of claim 10, wherein said circuitry comprises a positioning device (604) adapted to supply location data indicating a location of said mobile device, said at least one parameter comprising said location data.

12. The mobile device of any of claims 9 to 11, further comprising a proximity interface (302) for communicating with point of sale equipment (112) and transmitting said new value of said digital voucher to said point of sale equipment.

13. A digital voucher management system (600) comprising:

   a digital voucher server (102); and
   the mobile device (106) of any of claims 9 to 12.

14. The system of claim 13, further comprising at least one merchant equipment (601, 602, 603) in communication with said digital voucher server and adapted to provide said at least one parameter.

**Amended claims in accordance with Rule 137(2) EPC.**

1. A method of updating, by a mobile device (106), the value of a digital voucher having an initial value, comprising:

   receiving, by said mobile device from a remote server (102), said digital voucher having said initial value; the method **characterized in that** it comprises:

      receiving, by a processing unit (304) of said mobile device, at least one input parameter;
      calculating, by said processing unit, a new value of said digital voucher based on said at least one input parameter; and
      displaying said new value on a display (308) of said mobile device.

7

**2.** The method of claim 1, wherein said at least one input parameter is received from one or more of:

said remote server (102);
circuitry (604, 605) of said mobile device.

**3.** The method of claim 1 or 2, wherein said at least one input parameter comprises one or more of:

a current time and date value;
a stock count;
meteorological data; and
location data.

**4.** The method of any of claims 1 to 3, further comprising transmitting by said mobile device, during a commercial transaction involving said digital voucher, said new value of said digital voucher to point of sale equipment (112).

**5.** The method of any of claims 1 to 4, further comprising, after calculating said new value of said digital voucher, the step of receiving by said mobile device a request from said user to freeze the value of said digital voucher until a subsequent transaction involving said digital voucher.

**6.** The method of any of claims 1 to 5, wherein calculating said new value of said digital voucher is based on an algorithm (208) received by said mobile device in association with said digital voucher.

**7.** The method of any of claims 1 to 6, further comprising, prior to said step of receiving said second input data, the step of calculating, based on at least one initial parameter, said initial value of said digital voucher.

**8.** The method of any of claims 1 to 7, wherein said step of calculating said new value of said digital voucher is triggered by at least one of:

reception of a new value of at least one of said input parameters; and
the expiry of a fixed time interval.

**9.** A mobile device comprising:

a communications interface (606) adapted to receive from a remote server (102) a digital voucher having an initial value; the mobile device **characterized in that** it comprises:

a processing unit (304) adapted to:

receive at least one input parameter; and
calculate a new value of said digital voucher based on said at least one input parameter; and

a display (308) configured to display said new value of said digital voucher.

**10.** The mobile device of claim 9, further comprising circuitry adapted to supply said at least one input parameter.

**11.** The mobile device of claim 10, wherein said circuitry comprises a positioning device (604) adapted to supply location data indicating a location of said mobile device, said at least one parameter comprising said location data.

**12.** The mobile device of any of claims 9 to 11, further comprising a proximity interface (302) for communicating with point of sale equipment (112) and transmitting said new value of said digital voucher to said point of sale equipment.

**13.** A digital voucher management system (600) comprising:

a digital voucher server (102); and
the mobile device (106) of any of claims 9 to 12.

**14.** The system of claim 13, further comprising at least one merchant equipment (601, 602, 603) in communication with said digital voucher server and adapted to provide said at least one parameter.

Fig 1

| UNIQUE ID | TYPE | VALUE | ALGORITHM | EXPIRY | . . . . |
|-----------|------|-------|-----------|--------|---------|

Fig 2

| Proximity Interface | 302 |
|---|---|
| Processor | 304 |

| Memory | 306 |
|---|---|
| Digital Voucher Database | 314 |
| Digital Vouchers | 312 |
| Subscriber Application | 310 |
| Management Logic | 316 |
| Merchant Identification Logic | 318 |
| Voucher Transfer Logic | 320 |
| User Account | 322 |
| Consumer Data | 324 |

DISPLAY 308

Digital Voucher Applied !
Cost

$$$ → Savings → $

Fig 3

VOUCHER
ALGORITHM — — — 406

DIGITAL
VOUCHER
402

304

INPUT
PARAMETER(S)
404

PROCESSOR

308

DIGITAL VOUCHER
VALUES

DISPLAY

TIMING
SIGNAL

408

410

FREEZE VALUE

Fig 4

RECEIVE
DIGITAL
VOUCHER — S1

DETERMINE, BASED ON
INPUT PARAMETER(S), AN INITIAL VALUE
OF SAID DIGITAL VOUCHER

S2

DISPLAY VOUCHER VALUE
ON MOBILE DEVICE

S3

S4

TIME
ELAPSED AND/OR
NEW INPUT PARAMETER(S)
AVAILABLE ?

N

S5  DELAY

Y

S6

DETERMINE , BASED ON NEW
VALUE(S) OF SAID INPUT PARAMETER(S),
NEW VALUE OF SAID DIGITAL VOUCHER

S9

VOUCHER =
NON - DYNAMIC

Y

S8

VALUE
FROZEN ?

N

S7

DISPLAY VOUCHER
VALUE ON MOBILE DEVICE

Fig 5

600

Fig 6

Europäisches
Patentamt
European
Patent Office
Office européen
des brevets

# EUROPEAN SEARCH REPORT

**Application Number**

EP 11 30 5652

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 150 228 A1 (FOURNIR LTD [IE]) 31 October 2001 (2001-10-31) * abstract * * paragraph [0010] - paragraph [0022] * * paragraph [0025] - paragraph [0038] * ----- | 1-14 | INV. G06Q20/00 G06Q30/00 |
| X | US 6 138 106 A (WALKER JAY S [US] ET AL) 24 October 2000 (2000-10-24) * abstract * * column 2, line 25 - column 3, line 15 * * column 7, line 6 - line 29 * ----- | 1-14 | |
| X | US 2005/131761 A1 (TRIKA SANJEEV N [US] ET AL) 16 June 2005 (2005-06-16) * the whole document * ----- | 1-14 | |

TECHNICAL FIELDS
SEARCHED (IPC)

G06Q

The present search report has been drawn up for all claims

| Place of search | Date of completion of the search | Examiner |
|---|---|---|
| The Hague | 28 September 2011 | Diepstraten, Marc |

EPO FORM 1503 03.82 (P04C01)

**ANNEX TO THE EUROPEAN SEARCH REPORT
ON EUROPEAN PATENT APPLICATION NO.** EP 11 30 5652

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2011

| Patent document cited in search report | | Publication date | Patent family member(s) | | Publication date |
|---|---|---|---|---|---|
| EP 1150228 | A1 | 31-10-2001 | NONE | | |
| US 6138106 | A | 24-10-2000 | US 6330544 | B1 | 11-12-2001 |
| US 2005131761 | A1 | 16-06-2005 | NONE | | |

EPO FORM P0459

For more details about this annex : see Official Journal of the European Patent Office, No. 12/82